# EUROPEAN PATENT APPLICATION

(11) **EP 1 968 338 A1**
(43) Date of publication of application: **10.09.2008**
(21) Application number: 07004705.5
(22) Date of filing: 07.03.2007
(51) Int. Cl.: H04Q 7/38, H04L 29/06

(54) **A method for establishing a connection between a calling party and a called party in communication networks, especially supporting performance feature "handoff"**

(71) Applicant: Siemens Networks GmbH & Co. KG, 81541 München (DE)
(72) Inventor: Hoffmann, Klaus, 81735 München (DE)
(74) Representative: Maier, Daniel Oliver

(57) **Abstract**

A method for establishing a connection between a calling party (A) and a called party (B) in communication networks comprising at least a first network (PSTN; CS) and a second network (PS; IMS) is described. The communication networks are able to support a performance feature "handoff", wherein at least one of the called and the calling parties (A, B) is able to operate in at least a first (PSTN; CS) network. A request for initiating a call originated from the calling party (A) is diverted by a first network component (CAMEL; IN) of a network (PSTN; CS) to which the calling party (A) or the called party (B) is connected to, to a mobility control function (MCF) in the second network (PS; IMS), wherein a call forwarding counter in a header of the request message is increased by the first network component. A second network component (I-CSCF) of the second network (PS; IMS) evaluates the header of the request message initiated by the calling party (A) and corrects the call forwarding counter in the header by decreasing. The second network component (I-CSCF) forwards the request message towards the called party (B) for proceeding the establishing of the connection.

## Description

The present invention relates to a method for establishing a connection between a calling party and a called party in communication networks, especially supporting a performance feature "handoff" and comprising at least a first network and a second network, wherein at least one of the called and the calling parties is able to operate in at least the first network. The invention further relates to a network component for supporting the performance feature "handoff" in communication networks, wherein at least one of a called and a calling party is able to at least operate in the first network.

Recent communication architectures provide a separation of switching networks in units being necessary for switching and for the transport of user information or payload (bearer control). As a result there is a decomposition/separation between establishing a connection and the establishing of medium/bearer, respectively. Transferring of payload information can be accomplished by different transport technologies, like ATM, IP or Frame Relay.

With such a separation telecommunication services which currently are used in narrow band networks can be realized in broadband networks. Subscribers will be connected either directly (e.g. via a DSS1-protocol) or via a switching center in form of a media gateway controller (MGC) (e.g. via the ISUP-protocol). The payload information will be converted in a respective transport technology by media gateways (MG).

Controlling of the media gateways will be accomplished by respective media gateway controller (MGC). For controlling the media gateways standardized protocols are used by the media gateway controllers, e.g. the MGCP protocol or the H.248 protocol. For communication with each other, the media gateway controller uses a BICC (Bearer Independent Call Control) protocol, which is standardized by ITU. The BICC protocol is built from a plurality of standardized protocols and comprises an own protocol family.

An adequate protocol to the BICC protocol is the SIP protocol (RFC 3261) or rather with the addition SIP-T (RFC 3204)/SIP-I which were developed by IETF standardizing organization. With the latter protocol ISUP-messages can be transferred - in contrast to the SIP protocol. Transmission of ISUP-messages normally is done by tunnelling, that means transparent transmission.

The connection establishing between two or more SIP subscriber is effected with the use of SIP protocol elements. Thereby SDP (Session Description Protocol) data will be exchanged. SDP data are bearer endpoint related data which comprise information about the user equipment or codecs, IP-port, IP-address and so on. If a connection between a SIP subscriber and a H.323 or TDM/ISDN subscriber shall be established, those SIP protocol elements have to be converted according to H.323-, TDM- or ISDN protocol elements in the respective media gateway controllers.

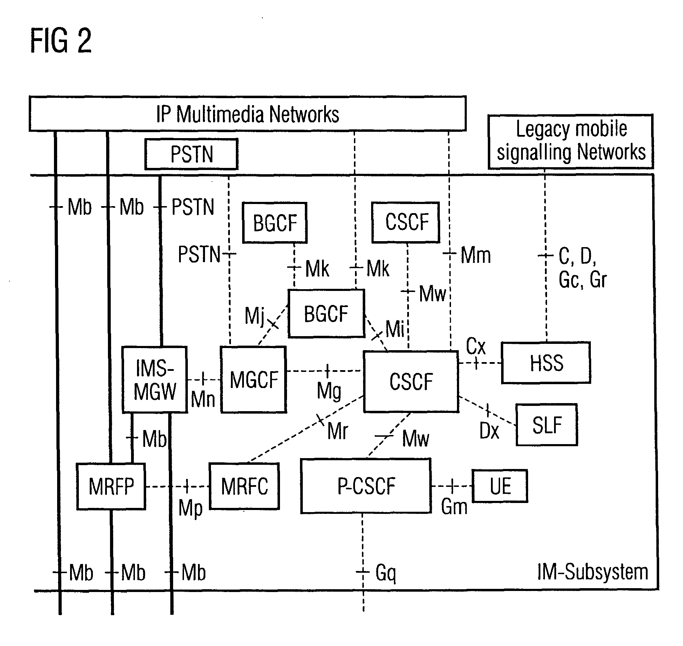

Basic configurations have led to recommendation Q.1912.5 "Interworking SIP and BICC/ISUP" within the ITU-T. Considerations have been made with regard to supplementary services, which are known from the ISDN world. The same is for the standardization organization 3GPP for mobile subscriber wherein SIP based services are specified (TS 24.229). In particular, with the IMS (IP Multimedia Subsystem) an architecture is specified and standardized, as shown in fig. 2.

Basically, in the ITU-T Q.1912.5 recommendation relationships are specified which result from SIP- and PSTN-subscriber. It is made no distinction between mobile subscriber and circuit switched subscriber. In FMC-networks (Fixed Mobile Conversion, i.e. mixed mobile fixed networks) also fixed subscriber, being not mobile, will be used. Therefore, in such FMC networks with different units like clients and network components (MGCF, MGC and so on) an interworking of all network units will come up.

Particularly, this is true for the performance feature "handoff". This performance feature can be used between the SIP protocol / WLAN protocol and the GSM protocol. Handoff means, that two subscriber (at least one being a SIP/WLAN subscriber and one being any other subscriber) can communicate with each other directly or indirectly via the SIP protocol. During the communication SIP/WLAN subscriber decides to proceed its communication via the GSM protocol instead of the SIP/WLAN protocol. The subscriber and user equipment, respectively, therefore has to assist those protocols. Such user equipment is called dual mode handheld (DMH or GSM/SIP).

It is to be noted that the current description is not limited to a DMH where the SIP and the CS interface resides in one physical entity. There are also applications where the two physical separated devices (one which uses SIP/IMS protocol and one which may use CS protocols) are allowed to perform handoff and/or handover. In that case the two physical separated devices are somehow virtually linked to each other via a signalling address, and device A may request to handover a existing call at the other device B to the device A.

During the switch over the connection will not be released. A handoff call causes a signalling to a central component in the network which is called mobility control function MCF. The mobility control function controls switching over from the IMS-system from SIP/WLAN to the GSM user equipment or vice versa for the involved user equipment DMH.

For a handover call it is necessary that each call will be routed (enforced routing) to the IMS-system where the MCF resides, if a dual mode user equipment DMH is involved. A service logic within the mobility control function initiates required procedures for roaming between the IMS and the circuit switched network. The mobility control function further is responsible for recognizing a desire for a handover from the circuit switched network to the IMS and vice versa.

For that a call forwarding service with the help of CAMEL/IN is used to divert or forward each call from or to a DMH in the IMS. This is accomplished by influencing ISUP parameter "original called party address" and/or "redirecting address" together with a redirecting counter according to the standard. The redirecting counter will be influenced with each call forwarding. The redirecting counter avoids unlimited diverting because diverting will be prevented if a threshold is reached.

Therefore it is an object of the present invention to provide a solution which allows improved interworking of call forwarding and enforced routing because of the performance feature "handoff".

This object is solved with the features of the independent claims. Embodiments improving the invention are set out in the dependent claims.

According to the invention in a method for establishing a connection between a calling party and a called party in communication networks, especially supporting the performance feature "handoff" and comprising at least a first network and a second network, wherein at least one of the called and the calling parties is able to operate in at least the first network (by means of dual mode user equipment or any separated device being virtually linked together), a request for initiating a call originated from the calling party is diverted by a first network component of the first network to which the calling party or the called party is connected to, to a mobility control function in the second network, wherein a call forwarding counter is increased by the first network component. A second network component of the second network evaluates the header of the request initiated by the calling party and corrects the call forwarding counter in the header by decreasing. The second network component forwards the request to the called party for proceeding the establishing of the connection.

A network component, especially for supporting the performance feature "handoff" in communication networks, comprising at least a first network and a second network, wherein at least one of a called and a calling party is able to operate in at least the first network, and wherein for establishing a connection between the calling party and the called party a (call setup) request is originated from the calling party which is diverted by a network component of a network to which the calling party or the called party is connected to, to a mobility control function in the second network, wherein a called forwarding counter is increased by the first network component, wherein the network component of the packet switched communication network is to evaluate the forwarding counter of the (call setup) request initiated by the calling party; to correct the call forwarding counter by decreasing; and to forward the request to the called party for proceeding the establishing of the connection.

An advantage of the current invention is, that even when a call is diverted several times and at the same time a MCF, or any other application, addressed by a service number being used by a service is activated, the involved subscriber (the calling party, called and any other forwarding party) does have the same amount of allowed call forwardings as if the MCF service or the other application would not be activated. This is, because the activation of the MCF service which leads to a compulsory diverting to the mobility control function within the packet switched network will not be counted as call forwarding by decreasing the call forwarding counter in the header. From a view of the subscriber the invention provides using a MCF service without having any restrictions regarding call forwarding. Therefore, the subscriber can use the attractive service of the mobility control function without limitations.

According to a further embodiment of the invention the header is a diversion header (Diversion Indication in SIP, draft-levy-sip-diversion-07) comprising a counter and correction of the call forwarding counter is executed by decreasing the counter by one.

According to another embodiment of the invention the header is a history-info header (RFC 4244: An Extension to the Session Initiation Protocol (SIP) for Request History Information) with a history-info header index comprising at least one level and correction of the call forwarding counter is executed by removing the last level.

In a further embodiment an identifier of the diverting first network component comprising an address and/or a number is added identifying the diverting entity by the first network component. The identifier may be a service number corresponding to a specific service. The feature "Handover/Handoff" is just an example of a possible service. The second network component may copy the identifier of the diverting first network component from the header of the request into an R-URI (Request-Uniform Resource Identifier) of the request. The request for instance is a SIP INVITE message. Alternatively or additionally the identifier of the diverting first network component is removed from the header. According to this embodiment not only the call forwarding counter is corrected but also the identifier of the diverting first network component which is sent additionally to the call forwarding counter is removed. Therefore, after having corrected the header of the request, there is no more information about this instance of the communication network which is responsible for the compulsory call forwarding.

In a further embodiment the second network component comprises the mobility control function. Alternatively the mobility control function may be located on a central component of the packet switched communication network being different to the second network component.

The second network component may be an I-CSCF (Interrogating Call Session Control Function). Alternatively the second network component being able to correct the header of a request regarding the call forwarding counter may be located in any other network component of the circuit switched network.

According to a further embodiment the mobility control function is to route the call to the packet switched network or the circuit switched network depending on the current residence of the called party. This functionality of the mobility control function is the reason of the compulsory call forwarding of the first network component of the network to which the calling party is connected.

According to a further embodiment different protocols may be used between the calling party and the mobility control function as well as the called party and the mobility controlled function, respectively. The SIP protocol, but not limited to, may be used as protocol between the calling party and the mobility control function as well as the called party and the mobility control function, respectively.

The invention further comprises a computer program product directly loadable into the internal memory of a digital computer, comprising software code portions for performing the steps of the method according to the invention when said product is run on a computer.

The invention will be described by reference to an embodiment shown in the accompanying drawings.
- Fig. 1: shows the basic relationships between PSTN- and/or mobile subscriber which are connected via an internet,
- Fig. 2: the IP multimedia subsystem (IMS) according to standard TS 24.229,
- Fig. 3: an embodiment of a FMC network, and
- Fig. 4: a scenario of the connection establishment in an Internet Protocol Multimedia Subsystem IMS when using a MCF service.

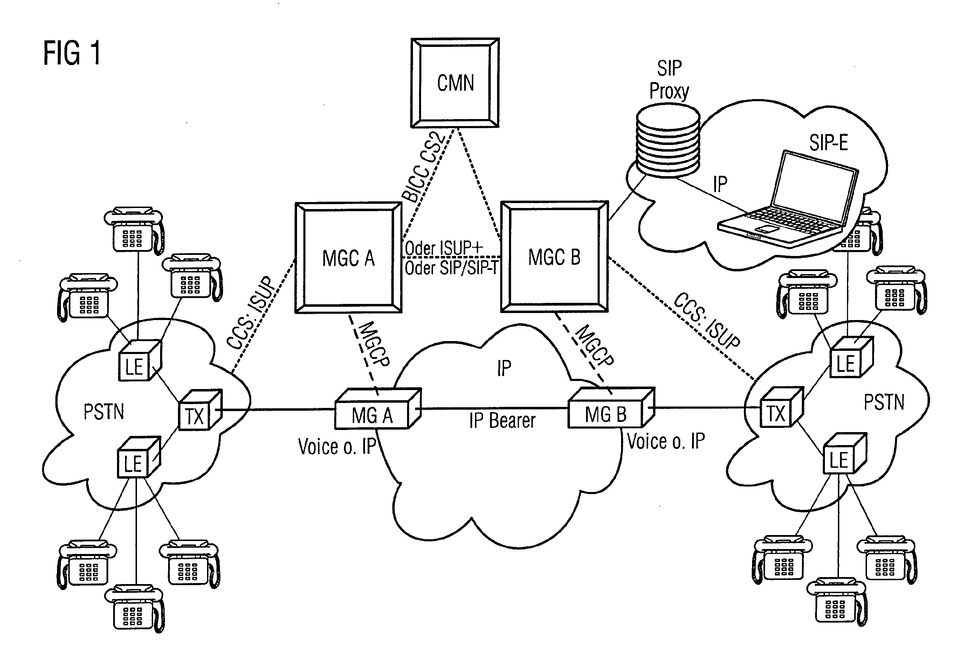

Fig. 1 shows the basic relationship between PSTN- and/or mobile subscriber (SIP-E) between which an internet-net is arranged. In the example, two PSTN-networks are disclosed in which a plurality of PSTN-subscribers are connected in a known way. The PSTN-subscribers are connected to telephone exchanges LE which are connected to transit-telephone exchanges TX by thereselves.

The transit telephone exchanges TX are responsible for the separation between signalization information and payload information. The signalization information is applied from the transit telephone exchanges TX via an ISUP-protocol to a respective media gateway controller MGC (MGC A or MGC B). The payload information are transmitted to a media gateway MG (MG A or MG B) which is an interface between a TDM-network and an ATM- and IP-transmission network, respectively. The payload information will be transferred via the respective transport network in a packet oriented manner. The media gateway MG A will be controlled by the media gateway controller MGC A. The media gateway MG B will be controlled by the media gateway controller MGC B. In case of a transmission of the payload information from the media gateway MG A to the media gateway MG B, the payload information will be converted in a TDM data stream, whereby the controlling is done by the media gateway controller MGC B. The TDM data stream will be fed to the respective PSTN-subscriber. Data which is transmitted between the media gateway controller MGC und the respective media gateway will be supported by a standardized protocol. This may be the MGCP or the H.248 protocol. Between the media gateway controller MGC A, MGC B preferably the SIP protocol is used according to the embodiment. The media gateway controller MGC B, called MGCF (media gateway control function) in figure 2) is connected to a subsystem IMS comprising network components I-CSCF (Interrogating-Call Session Control Function), S-CSCF (serving-Call Session Control Function) P-CSCF (Proxy-Call Session Control Function) or PDF (Policy Decision Function) which allows to connect mobile subscriber for example with PSTN subscriber. The configuration shown in fig. 1 can be seen as a FMC network in a simple development.

Fig. 2 shows the definition and functions of an IMS-system according to 3GPP TS 23.002 V6.5.0 (2004-06) standard. Here, BGCF (Breakout Gateway Control Function) functionality is described. Furthermore, components MGCF, CSCF, P-CSCF as well as further components are shown, thereby concurrence is described in the above named standard. For instance, BGCF function chooses the network (domain, e.g. PSTN), in which a call initiated by a SDP user equipment shall be routed. In case the BGCF function sets that a destination is within the own network, that means the network, in which the BGCF function is arranged, the BGCF function chooses a MGCF functionality which is responsible for the interworking with the PSTN network. If the destination is in a different network, the BGCF function forwards the signalling towards the other network. Furthermore, fig. 2 discloses a network component P-CSCF, which acts as a controller of the interface Gq. Within this interface or gateway the function PDF is stored which provides rules in a network.

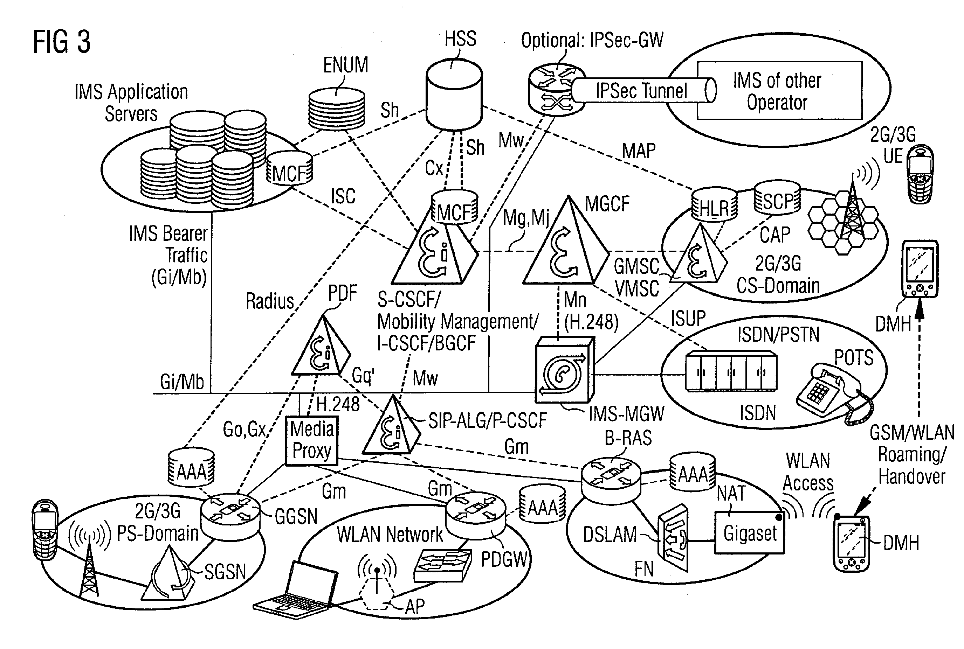

Fig. 3 shows a FMC network comprising a plurality of structures. Here, a plurality of connected networks is shown, such as mobile networks (GPRS, UMTS) and packet switched networks (xDSL, LAN) as well as wireless networks (WLAN) and conventional GSM-networks and PSTN/ISDN networks. As transition points subsystems IMS or domains are provided. Furthermore, fig. 3 shows a network component MCF which is responsible for the controlling of the performance feature "handoff".

In the following description, it is assumed, that either a subscriber A (calling party) wants to communicate with a subscriber B (called party) via the CS/GSM/PSTN protocol, or the subscriber B (called party) is potentially reachable in the CS/GSM/PSTN network. When starting the establishing of a connection it has to be known, that subscriber A wants to set up a connection to a user equipment which is able to operate as well in a packet switched network as in a circuit switched network. User equipment with this behaviour are called dual mode handsets. The request for initiating such a call, e.g. in form of a SIP INVITE message, is routed via a mobility control function within the packet switched communication network IMS. MCF has the knowledge that user equipment of subscriber B is a dual mode handheld or a virtually linked one and therefore supports as well as SIP/WALN protocol as GSM protocol. According to the current embodiment the user equipment of subscriber B is accomplished as a mobile user equipment, but not limited. Therefore it is connected with MCF via WLAN (or DSL) protocol. Both terminals communicate directly or indirectly via the SIP protocol which means that the SIP signalling is fed from MCF to the terminal of called party B. SIP bearer (RTP) will be introduced via WLAN/DSL and maybe via a media proxy to the subscriber B (Gi/Mb), i.e. subscriber B is a SIP via WLAN/DSL subscriber.

When establishing a connection between subscriber A which is the calling party and subscriber B which is the called party a request for initiating the call originated from the calling party is diverted to the mobility control function MCF in the IMS. The diverting is executed by a CAMEL call forwarding procedure (in case that at least one of the two subscriber is connected to the CS/PSTN network) in a network component of the network to which the calling party or the called party is connected. The call setup request comprises a call forwarding counter in a header of the request as well as an identifier of the diverting network component. The identifier comprises an address and/or a number. When forwarding the setup request the CAMEL call forwarding procedure automatically increases the call forwarding counter. Since there is a maximum number of call forwardings a given threshold would be exceeded after a minor number of call forwardings compared to the case with no CAMEL call forwarding procedure, needed to enforce the routing towards the IMS network.

Therefore, the invention suggests to recognize the request being diverted by the network component. In the example this is done by an I-CSCF which recognizes a service number in the Request-URI (R-URI). I-CSCF copies the identifier of the header of the request of a last diverting network component and pastes the identifier into the R-URI of the request.

I-CSCF determines the header of the request. The header can be a diversion header or a so-called history-info header. I-CSCF removes the identifier of the last diverting network component from the header. In case the header is a call diversion header the call forwarding counter is decremented by one. In case the header is a history-info header comprising a history-info header index the last level of the history-info header index is removed by removing the last level. For instance if the header comprises the information "1.1.1", after correction of the header index the header is "1.1" indicating that only two diversions have taken place instead of three. In case the history header index comprises only one level when reaching I-CSCF, the header will be removed totally.

After correction of the call forwarding counter in the header by decreasing it the request is forwarded towards subscriber B, the called party.

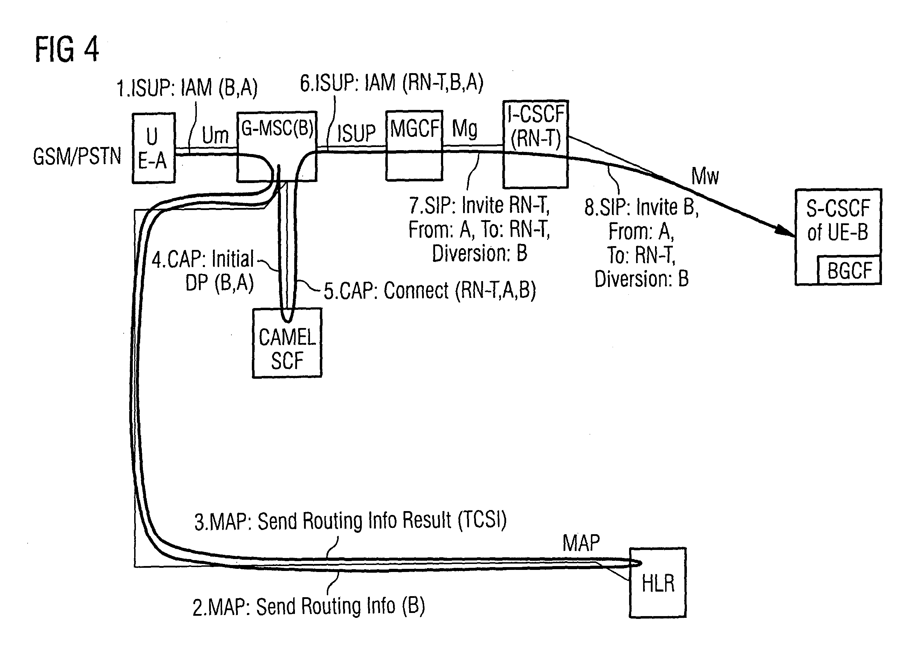

The scenario described above is shown in fig. 4. In that figure the route of the call set up request is highlighted. The user equipment A which is of a type GSM/PSTN is connected to a G-MSC to which an "ISUP: IAM (B, A)"-message is sent. The message is forwarded to a HLR (Home Location Register) which is done by a mobile application protocol (MAP)-message: "MAP: Send Routing Info (B)". After having identified the routing info to the called party (user equipment B) a message is directed back to G-MSC ("MAP: Send Routing Info Result (TCSI)"). The message received from G-MSC is forwarded to a CAMEL SCF ("CAP: Initial DP (B, A)"). CAMEL SCF sends a "CAP: Connect (RN-T, A, B)"-message back to G-MSC. RN-T consists of the service number. Furthermore, a "ISUP: IAM (RN-T, B, A)"-message is sent from the G-MSC to MGCF, whereby MCF is addressed. From MGCF the message is sent to I-CSCF by "SIP: Invite RN-T, From: A, To: RN-T, Diversion: B". This message causes a forced call routing to the MCF. Then, after manipulating is done in the I_CSCF, a "SIP: Invite B, From: A, To: RN-T, Diversion: B)"-message is transferred from I-CSCF to S-CSCF. In I-CSCF of user equipment B a reduction of the call forwarding header is executed.

The auxiliary compulsory call forwarding for the service MCF is reversed now. All terminals are able to perform an amount of call forwardings as if they would not use a MCF service.

## Claims

1. A method for establishing a connection between a calling party (A) and a called party (B) in communication networks, especially supporting a performance feature "handoff" and comprising at least a first network (PSTN; CS) and a second network (PS; IMS), wherein at least one of the called and the calling parties (A, B) is able to operate in at least the first network (PSTN; CS), wherein
- a request for initiating a call originated from the calling party (A) is diverted by a first network component (CAMEL; IN) of the first network (PSTN; CS) to which the calling party (A) or the called party (B) is connected to, to a mobility control function (MCF) in the second network (IMS), wherein a call forwarding counter in a header of the request is increased by the first network component (CAMEL; IN);
- a second network component (I-CSCF) of the second network (PS; IMS) evaluates the header of the request initiated by the calling party (A) and corrects the call forwarding counter in the header by decreasing; and
- the second network component (I-CSCF) forwards the request towards the called party (B) for proceeding the establishing of the connection.

2. The method according to claim 1, wherein the header is a diversion header comprising a counter and correction of the call forwarding counter is executed by decreasing the counter by 1.

3. The method according to claim 1, wherein the header is a history-info header with a history header index comprising at least one level and correction of the call forwarding counter is executed by removing the last level.

4. The method according to one of the preceding claims, wherein an identifier of the diverting first network component (CAMEL; IN) comprising an address and/or a number is added to request by the first network component (CAMEL; IN).

5. The method according to claim 4, wherein the second network component (I-CSCF) copies the identifier of the diverting first network component (CAMEL; IN) from the header of the request into a R-URI of the request in case of the called party (B) is to be invoked by a service addressed by the identifier.

6. The method according to one of the claims 4 or 5, wherein the identifier of the diverting first network component (CAMEL; IN) is removed from the header.

7. The method according to one of the preceding claims, wherein the second network component (I-CSCF) comprises the mobility control function.

8. The method according to one of the claims 1 to 6, wherein the mobility control function (MCF) is located on a central component of the second network (PS; IMS) being different to the second network component.

9. The method according to one of the preceding claims, wherein the second network component is an Interrogating Call Session Control Function (I-CSCF).

10. The method according to one of the preceding claims, wherein the mobility control function (MCF) is to route the call to the second network (PS; IMS) or the first network (PSTN; CS) depending on the current residence of the called party (B).

11. The method according to one of the preceding claims, wherein different protocols may be used between the calling party (A) and the mobility control function as well as the called party (B) and the mobility control function, respectively.

12. The method according to one of the preceding claims, wherein SIP is directly or indirectly used as protocol between the calling party (A) and the mobility control function and the called party (B) and the mobility control function, respectively.

13. The method according to one of the preceding claims, wherein the first network (PSTN; CS) is a circuit switched network.

14. The method according to one of the preceding claims, wherein the second network (PS; IMS) is a packet switched network.

15. A network component, especially for supporting a performance feature "handoff", in communication networks, comprising at least a first network (PSTN; CS) and a second network (PS; IMS), wherein at least one of a called and a calling parties (A, B) is able to operate in at least the first network (PSTN; CS), and wherein for establishing a connection between the calling party (A) and the called party (B) a request is originated from the calling party (A) which is diverted by a network component (CAMEL; IN) of the network to which the calling party (A) or the called party (B) is connected to, to a mobility control function (MCF) in the second communication network (PS; IMS), wherein a call forwarding counter in a header of the request is increased by the first network component,
wherein the network component (I-CSCF) of the second network (PS; IMS) is to
- evaluate the the forwarding counter of the request initiated by the calling party (A);
- correct the call forwarding counter in the header by decreasing; and
- forward the request to the called party (B) for proceeding the establishing of the connection.

16. The network component according to claim 13, wherein the network component is to perform the method according to one of the claim 2 to 14.

17. Computer program product directly loadable into the internal memory of a digital computer, comprising software code portions for performing the steps of one of the claims 1 to 14 when said product is run on a computer.
